# EUROPÄISCHE PATENTSCHRIFT

(11) **EP 3 326 987 B1**
(45) Veröffentlichungstag und Bekanntmachung des Hinweises auf die Patenterteilung: **27.03.2019**
(21) Anmeldenummer: 17197219.3
(22) Anmeldetag: 19.10.2017
(51) Int. Cl.: C04B 41/00, C04B 41/50, C04B 33/34, C03C 3/108, C03C 8/12, C03C 8/20, C04B 41/86, C04B 111/20

(54) **KERAMISCHER GEGENSTAND UND VERFAHREN ZUR HERSTELLUNG EINES SOLCHEN**
CERAMIC OBJECT AND METHOD FOR PRODUCING SAME
OBJET EN CÉRAMIQUE ET PROCÉDÉ DE FABRICATION D'UN TEL OBJET

(30) Priorität: 24.11.2016 DE 102016122709
(43) Veröffentlichungstag der Anmeldung: 30.05.2018
(73) Patentinhaber: Duravit Aktiengesellschaft, 78132 Hornberg (DE)
(72) Erfinder: LATIEF, Othmar, 77723 Gegenbach (DE); SANDER, Sebastian, 77796 Mühlenbach (DE); STAMMEL, Thomas, 78132 Hornberg (DE)
(74) Vertreter: Lindner Blaumeier Patent- und Rechtsanwälte

(56) Entgegenhaltungen:
- EP-A2- 0 509 792
- WO-A1-2012/135194
- CN-A- 1 843 995
- DE-B3-102015 101 609
- SU-A1- 537 969
- US-A1- 2009 104 459

## Beschreibung

Die Erfindung betrifft einen keramischen Gegenstand, insbesondere in Form eines Sanitär-, Küchen- oder Laborgegenstandes.

Keramische Gegenstände sind aus keramischen Materialien hergestellte oder keramische Materialien als wesentliche Bestandteile umfassende Gegenstände und seit langer Zeit bekannt. Zu den bekannten Anwendungs- bzw. Verwendungsbereichen entsprechender keramischer Gegenstände zählen insbesondere Sanitärgegenstände wie beispielsweise WCs, Waschbecken, Duschtassen, Wannen, Bidets, Urinale etc., aber auch Küchengegenstände wie beispielsweise Küchen- oder Arbeitsplatten, Schalen, Tabletts o.dgl. oder entsprechende Laborgegenstände, ebenfalls beispielsweise in Form von Schalen, Tabletts und Ähnlichem, wobei diese Aufzählung natürlich nicht abschließend ist.

Ein solcher keramischer Gegenstand besteht üblicherweise aus einem gebrannten keramischen Grundkörper sowie einer auf diesem aufgebrachten, ebenfalls gebrannten Glasur, die die Oberfläche des Gegenstandes bildet. Diese Glasur wird üblicherweise in Form eines Schlickers auf den entweder ungebrannten oder bereits vorgebrannten keramischen Grundkörper aufgebracht und anschließend im Rahmen eines Brandes bei hinreichender Temperatur in an sich bekannter Weise gebrannt.

Insbesondere in den vorstehend genannten Anwendungs- bzw. Verwendungsbereichen können antibakterielle Eigenschaften jeweiliger dort einzusetzender keramischer Gegenstände zweckmäßig oder gefordert sein. Eine handelsübliche Glasur, die von ihrer Zusammensetzung nicht spezifisch hergerichtet ist, weist keine nennenswerte antibakterielle Eigenschaft auf. Um der Glasur eine verbesserte antibakterielle Eigenschaft zu verleihen, ist es beispielsweise aus DE 10 2015 101 609 A1 bekannt, die Glasur mit einem hohen Anteil an Zinkoxid zu versehen, der dort mit mehr als 35 Masse-% angegeben ist. Versuche mit glasierten Testkörpern gemäß dem gängigen Test-Standard JIS Z 2801 : 2010 (JIS = Japanese Industrial Standard) zeigten eine Reduktion der auf die Testkörper aufgebrachten Testkeime Escherichia coli von ca. 3,0 log₁₀-Stufen, was einer Reduktion von ca. 99 % entspricht, das heißt, dass das Keimwachstum mit einer solchen Glasur bereits beachtlich reduziert werden kann.

CN 1 843 995 A beschreibt eine Glasur mit antibakteriellen Eigenschaften.

Gleichwohl besteht ein Bedürfnis nach einer demgegenüber weiter verbesserten Glasur.

Der Erfindung liegt damit die Aufgabe zugrunde, einen keramischen Gegenstand mit einer im Hinblick auf ihre antibakteriellen Eigenschaften verbesserten Glasur anzugeben.

Zur Lösung dieses Problems ist erfindungsgemäß ein keramischer Gegenstand insbesondere in Form eines Sanitär-, Küchen- oder Laborgegenstands vorgesehen, umfassend einen keramischen Grundkörper sowie eine auf diesem aufgebrachte gebrannte Glasur, wobei die gebrannte Glasur SiO₂ zu 45-55 Masse-%, Al₂O₃ zu 6-12 Masse-%, ZnO zu 15-35 Masse-%, sowie ferner PbO zu 0,1-15 Masse-% und/oder CuO zu 0,025-2 Masse-% und/oder Bi₂O₃ zu 0,25-7 Masse-% enthält.

Die bei dem erfindungsgemäßen keramischen Gegenstand vorgesehene Glasur enthält, neben den glasurtypischen Bestandteilen SiO₂ (45-55 Masse-%) und Al₂O₃ (6-12 Masse-%) sowie den Glasur-typischen Bestandteilen an Flussmitteln (z. B. K₂O, Na₂O und/oder CaO) und Trübungsmitteln (z.B. ZrO₂, SnO) und etwaigen sonstigen Glasur-typischen Verunreinigungen, zum einen ZnO zu 15-35 Masse-%, also ebenfalls zu einem beachtlichen Anteil. Darüber hinaus sind die die antibakteriellen Eigenschaften wesentlich bestimmende Metalloxide PbO zu 0,1-15 Masse-% und/oder CuO zu 0,025-2 Masse-% und/oder Bi₂O₃ zu 0,25-7 Masse-% enthalten. Diese drei genannten Metalloxide können entweder allein vorliegen, oder wenigstens zwei davon als Mischung, oder alle drei. Es hat sich herausgestellt, dass durch Zugabe eines oder mehrerer dieser Oxide die antibakterielle Eigenschaft der Glasur gegenüber der bisher bekannten, ZnO in hohem Umfang enthaltenden Glasur deutlich verbessern lässt. In Summe weist die Glasur unter Berücksichtigung aller Bestandteile, also der explizit genannten sowie der sonstigen Fluss- und Trübungsmittel und etwaigen Verunreinigungen natürlich 100 Masse-% auf.

Erfindungsgemäß ist der ZnO-Gehalt reduziert, er wird zumindest zum Teil durch eines oder mehrerer der genannten Metalloxide PbO, CuO oder Bi₂O₃ ersetzt.

Durch die Integration eines oder mehrerer der genannten Metalloxide konnte erreicht werden, dass die Glasur eine Reduktion der Testkeime von über 5 log₁₀-Stufen, teilweise sogar von 6 log₁₀-Stufen bewirkt, wobei ab einer Reduktion von 5 log₁₀-Stufen nicht mehr nur von einem antibakteriellen, sondern von einem desinfizierenden Effekt gesprochen wird. Das heißt, dass der erfindungsgemäße keramische Gegenstand respektive die erfindungsgemäße Glasur desinfizierende Eigenschaften zeigt. Dies bedeutet, dass ein Keimwachstum vollständig unterbunden wird, mithin also auf der Glasuroberfläche keine mikrobielle Besiedelung stattfindet.

Die Wirksamkeit der erfindungsgemäßen Glasur beruht auf dem oligodynamischen Effekt. Dieser oligodynamische Effekt beschreibt die schädigende Wirkung von Metallkationen auf lebende Zellen. In der erfindungsgemäßen Glasur sind nun oberflächlich neben den Zn-Ionen zusätzlich aus einem oder mehreren der genannten Metalloxide stammende Kationen, nämlich Pb-Kationen und/oder Cu-Kationen und/oder Bi-Kationen vorhanden. Wie sich herausgestellt hat, haben diese Metallkationen eine besonders hohe Schädigungswirkung, woraus die extrem hohe Keimreduktion resultiert.

In dem jeweils angegebenen Anteilbereich, insbesondere des ZnO, des PbO-, des CuO sowie des Bi₂O₃ sind sämtliche Massen-%-Anteile denkbar und relevant. Das heißt, dass innerhalb der Glasur sämtliche zwischen den jeweils angegebenen Minimal- und Maximalwerten liegende Werte als entsprechender Oxidanteil in der Glasur vorliegen können und erfindungswesentlich sind. Es gilt damit jedweder Zwischenwert zwischen dem angegebenen Minimal- und Maximalwert des jeweiligen Intervalls als erfindungswesentlich offenbart, insbesondere in jeweiligen Stufen von 0,1 Masse-%.

Der keramische Gegenstand weist, wie beschrieben, im fertigen Zustand einen keramischen Grundkörper auf, der typischerweise die Geometrie des keramischen Gegenstandes definiert, da die Glasur nur sehr dünn ist und typischerweise im Bereich eines oder weniger Millimeter liegt. Dabei muss die Glasur nicht auf die gesamte Oberfläche des keramischen Gegenstandes aufgebracht sein, vielmehr kann sie auch nur abschnittsweise aufgebracht sein, beispielsweise auf der Sichtseite, während beispielsweise die rückseitigen Flächen unglasiert verbleibt. Natürlich besteht auch die Möglichkeit, den keramischen Gegenstand vollständig, also an allen Flächen zu glasieren. Neben den eingangs genannten Sanitär-, Küchen- oder Laborgegenständen, deren Aufzählung nicht abschließend ist, kann ein keramischer Gegenstand aber auch beispielsweise in Form einer Fliese für den Innen- und Außenbereich, eines Ziegels wie eines Dachziegels, eines Geschirrteils z. B. in Form einer Tasse, eines Tellers, einer Platte etc. oder in Form eines Schmuckteils ausgeführt sein.

In weiterer Konkretisierung des oder der jeweiligen Anteile an PbO, CuO oder Bi₂O₃ sieht die Erfindung vor, dass der Gehalt an PbO zwischen 0,5-12 Masse-% und/oder der Gehalt an CuO zwischen 0,05-1,5 Masse-% und/oder der Gehalt an Bi₂O₃ zwischen 0,35-6 Masse-% beträgt.

In weiterer Präzisierung der jeweiligen Oxidanteile sollte der Gehalt an PbO zwischen 0,75-10 Masse-% und/oder der Gehalt an CuO zwischen 0,075-1,25 Masse-% und/oder der Gehalt an Bi₂O₃ zwischen 0,5-5 Masse-% betragen.

Insbesondere sollte der Gehalt an PbO zwischen 1-8 Masse-% und/oder der Gehalt an CuO zwischen 0,1-1 Masse-% betragen.

Wie beschrieben, kann entweder nur eines der Metalloxide PbO, CuO oder Bi₂O₃ in der erfindungsgemäßen Glasur vorliegen, daneben können auch zwei dieser Oxide in der Glasur vorliegen, oder alle drei. Sind zwei oder drei dieser Oxide vorhanden, so können die jeweiligen Anteile derselben auch im Mischungsfall die einleitend angegebene Masse-%-Anteile mit den jeweiligen angegebenen Minimal- und Maximalwerten betragen. Auch hier gilt, dass im Falle von Oxidmischungen sämtliche Anteilskombinationen der in den jeweiligen Masse-%-Intervallen liegenden respektive über diese definierten Werte vorhanden sein können. Auch in Bezug auf Oxidmischungen gelten demzufolge sämtliche Anteile respektive Mischungsverhältnisse, die sich aus den in den jeweiligen Intervallen liegenden Werten ergeben, als erfindungswesentlich offenbart. Das heißt, dass beispielsweise bei Vorhandensein von PbO und CuO jedes der Oxide zu einem beliebigen Masse-%-Anteil, wie er sich aus dem jeweils einleitend angegebenen Anteilsintervall ergibt, vorliegen kann.

Besonders zweckmäßig und als besonders wirksam hat es sich herausgestellt, wenn sowohl PbO als auch CuO, nicht aber Bi₂O₃ in der Glasur enthalten sind, wobei, wie ausgeführt, PbO und CuO mit jedem innerhalb der vorstehend genannten Intervalle in der Glasur vorliegen kann. Testkörper mit Glasuren, die PbO und CuO, nicht aber Bi₂O₃ enthielten, zeigten die besten Ergebnisse, worauf nachfolgend noch eingegangen wird. Alternativ ist es zweckmäßig, wenn der Gegenstand nur Bi₂O₃, nicht aber PbO und CuO enthält. In Bezug auf Bi₂O₃ konnten die besten Ergebnisse mit einer Glasur, die nur Bi₂O₃, aber keines der anderen Oxide PbO und CuO enthält, erreicht werden.

Auch der Gehalt an ZnO ist, wie beschrieben, im einleitend angegebenen Intervall von 15-35 Masse-% variabel. Er beträgt jedoch in keinem Fall mehr als 35 Masse-%, eher deutlich weniger, nachdem insbesondere der ZnO-Anteil durch das oder die zugegebenen Oxide ersetzt wird.

So ist es gemäß einer zweckmäßigen Weiterbildung der Erfindung denkbar, dass der Gehalt an ZnO zwischen 18-32 Masse-%, insbesondere zwischen 20-30 Masse-% beträgt. Besonders bevorzugt liegt der ZnO-Anteil zwischen 22-28 Masse-%, insbesondere, jedoch nicht ausschließlich, wenn PbO und CuO als effektive Oxide enthalten sind. Auch hier gilt, dass jeder im Intervall liegende Zwischenwert, z.B. in 0,1 Masse-%-Stufen, als erfindungswesentlich offenbart gilt. Die Schichtdicke der Glasur sollte zwischen 0,1-3 mm, insbesondere zwischen 0,5-1 mm betragen. Sie kann, wie bereits einleitend beschrieben, nur abschnittsweise oder vollflächig auf dem keramischen Grundkörper aufgebracht sein.

Neben dem keramischen Gegenstand selbst betrifft die Erfindung ferner ein Verfahren zur Herstellung eines keramischen Gegenstandes der vorbeschriebenen Art. Dieses Verfahren ist gekennzeichnet durch folgende Schritte:
- Bereitstellen eines ungebrannten oder vorgebrannten keramischen Grundkörpers,
- Aufbringen einer Glasurbeschichtung unter Verwendung eines Schlickers enthaltend eine wenigstens 80 Masse-% PbO enthaltende Bleifritte zu 0,12-18 Masse-% und/oder CuO-Pulver zu 0,025-2 Masse-% und/oder Bi₂O₃-Pulver zu 0,25-7 Masse-%,
- Durchführung eines Brandes unter Ausbildung einer gebrannten Glasur bei einer Temperatur von 1100-1350 °C.

Die Glasurbeschichtung wird in Form eines Schlickers hergestellt respektive aufgebracht, der zumindest aus den an sich typischen Glasurrohstoffen wie Quarz, Kaolin, Kaolinschamotte, Calciumcarbonat, Dolomit, Feldspat, Zirkonsilikat und Zinkoxid nebst Anmachwasser hergestellt wird. Zu diesem Ansatz werden nur ein oder mehrere der genannten Metalloxide PbO, CuO und/oder Bi₂O₃ zugegeben. Das PbO wird in Form einer Bleifritte zugegeben, die wenigstens 80 Masse-% PbO neben SiO₂ enthält. Aufgrund des SiO₂-Anteils ist etwas mehr an Bleifritte einzuwiegen, bezogen auf den PbO-Gehalt in der gebrannten Glasur, weshalb erfindungsgemäß Bleifritte zwischen 0,12-18 Masse-% zugegeben wird.

Das CuO wird in Pulverform zugegeben, und zwar als reines CuO-Pulver, weshalb es zu 0,025-2 Masse-% zugegeben wird. Entsprechendes gilt im Fall des Bi₂O₃-Pulvers, das ebenfalls als reines Pulver und daher zu 0,25-7 Masse-% zugegeben werden kann. Auch hier sind selbstverständlich entsprechende Mengenvariationen innerhalb der Intervalle möglich, wie auch nur eines oder Mischungen mehrerer der genannten Oxide möglich sind.

Bevorzugt wird ein Schlicker enthaltend die genannte Bleifritte zu 0,6-14,4 Masse-% und/oder CuO-Pulver zu 0,05-1,5 Masse-% und/oder Bi₂O₃-Pulver zu 0,35-6 Masse-% verwendet. Die mit diesem Anteil eingebrachte Bleifritte führt zu einem PbO-Gehalt in der gebrannten Glasur von ca. 0,5-12 Masse-%.

In weiterer Konkretisierung kann ein Schlicker verwendet werden, der Bleifritte zu 0,9-12 Masse-% und/oder CuO-Pulver zu 0,075-1,25 Masse-% und/oder Bi₂O₃-Pulver zu 0,5-5 Masse-% verwendet. Die demgemäß eingewogene Bleifritte führt zu einem PbO-Gehalt in der gebrannten Glasur von ca. 0,75-10 Masse-%.

Schließlich kann ein Schlicker verwendet werden, enthaltend Bleifritte zu 0,12-9,6 Masse-% und/oder CuO-Pulver zu 0,1-1 Masse-%. Die mit diesem Anteil eingewogene Bleifritte führt zu einem PbO-Gehalt in der gebrannten Glasur von ca. 0,1-8 Masse-%.

Bevorzugt wird ein Schlicker verwendet, in dem entweder sowohl PbO als auch CuO, nicht aber Bi₂O₃, oder Bi₂O₃, nicht aber PbO und CuO enthalten sind.

Auch der ZnO-Gehalt im Schlicker ist variabel. Er kann entweder, wie einleitend beschrieben, 15-35 Masse-% betragen. In weiterer Konkretisierung kann ein Schlicker enthaltend ZnO zu 18-32 Masse-%, insbesondere 20-30 Masse-% verwendet werden. Besonders bevorzugt wird ein Schlicker enthaltend ZnO zu 22-28 Masse-% verwendet.

Die Glasurbeschichtung wird in weiterer Ausgestaltung des erfindungsgemäßen Verfahrens mit einer Schichtdicke von 0,1-3 mm, insbesondere von 0,5-1 mm aufgebracht. Dies kann in einem Druck-, insbesondere Siebdruck-, Gieß-, Spritz-, Sprüh-, Streich- oder Tauchverfahren oder in einer Kombination von wenigstens zwei der genannten Verfahren erfolgen.

Die Glasur wird, wie beschrieben, durch einen Brand im Temperaturbereich zwischen 1100-1350° C durchgeführt. Dieser Temperaturbereich bietet sich sowohl bei Verwendung eines ungebrannten keramischen Grundkörpers als auch eines vorgebrannten keramischen Grundkörpers (keramische Scherben) an. In dem genannten Temperaturbereich ist ein hinreichendes Aufschmelzen der in dem Glasurschlicker enthaltenden Rohstoffe möglich, ohne dass diese zu stark verflüssigt werden. Bevorzugt liegt die Brenntemperatur zwischen 1130-1300° C.

Weitere Vorteile und Einzelheiten der Erfindung ergeben sich aus den im Folgenden beschriebenen Ausführungsbeispielen sowie anhand der Zeichnung. Dabei zeigen:
- Fig. 1: eine Tabelle zur Darstellung der antibakteriellen Wirkung dreier Testkörper enthaltend ZnO, PbO und CuO, wobei der Gehalt an PbO variiert und der Gehalt an ZnO und CuO im Wesentlichen konstant ist,
- Fig. 2: eine Tabelle zur Darstellung der antibakteriellen Wirkung dreier Testkörper enthaltend ZnO, PbO und CuO, wobei der Gehalt an CuO variiert und der Gehalt an ZnO und PbO im Wesentlichen konstant ist, und
- Fig. 3: eine Tabelle zur Darstellung der antibakteriellen Wirkung sämtlicher Testkörper einschließlich einer Standardglasur ohne ZnO, PbO, CuO, einer Vergleichsglasur basierend auf der Standardglasur, jedoch zusätzlich enthaltend ZnO, und einer besonders wirksamen Glasur enthaltend ZnO, PbO und CuO.

Im Rahmen der nachfolgend geschilderten Versuchsdurchführung wurden eine Reihe von erfindungsgemäßen Glasuren und Vergleichsglasuren hergestellt.

Jeder Testkörper bestand aus einem keramischen Grundkörper in Form einer keramischen Platte, die sodann mit einem entsprechend angemachten Schlicker, der je nach zu untersuchender Glasurzusammensetzung erstellt wurde, in einem Sprühverfahren beschichtet wurde. Sodann wurden die Testkörper jeweils bei einer Temperatur von ca. 1280°C für die Dauer von 19 Stunden in oxidierender Atmosphäre gebrannt.

Anschließend wurden die einzelnen Testkörper hinsichtlich der antimikrobiellen Wirksamkeit der jeweiligen aufgebrachten Glasur gemäß dem Test-Standard JIS Z 2801 : 2010 "Antibacterial Products - Test for antibacterial activity and efficacy" untersucht. Im Rahmen der Untersuchung wurde auf jede Glasuroberfläche eine bestimmte Menge an Testkeimen Escherichia coli aufgebracht. Die gleiche Menge an Testkeimen wurde auch auf die Glasoberfläche eines Glaskörpers appliziert. Beide Körper wurden für 24 Stunden unter definierten Testbedingungen inkubiert. Anschließend wurden die Anzahl der Kolonie bildenden Einheiten beider Testflächen (Glasuroberfläche und Glasoberfläche) gezählt. Die Addition des Betrages der Reduktionsrate der Keime auf der Glasurfläche mit dem Betrag der Wachstumsrate der Keime auf der Glasfläche ergibt die Reduktionsrate, die in log₁₀-Stufen angegeben wird. Eine log₁₀-Stufe entspricht der Reduktion der Keime um eine Zehnerpotenz. Von einem antibakteriellen Effekt wird ab einer Reduktion von 2 log₁₀-Stufen gesprochen, eine Desinfektion liegt ab einer Reduktion von 5 log₁₀-Stufen vor.

Zunächst wurde eine Standardglasur SG ohne ZnO, PbO, CuO und Bi₂O₃ hergestellt. Der Schlicker enthielt folgende Rohstoffe:

| **Rohstoff** | **Masse-%** |
|---|---|
| Quarz | 29,10 |
| Calciumcarbonat | 21,30 |
| Feldspat | 17,80 |
| Schamotte | 12,50 |
| Zirkonsilikat | 10,50 |
| Glasfritte | 4,60 |
| Kaolin | 4,20 |

Aus den angeführten Rohstoffen wurde ein Schlicker, bei dem die Rohstoffe in Wasser dispergiert sind, hergestellt.

Dieser Schlicker wurde auf einen plattenförmigen vorgebrannten keramischen Grundkörper (vorgebrannt) aufgesprüht, die Schichtdicke betrug ca. 1 mm. Sodann wurde der Probekörper bei ca. 1280°C für 19 h gebrannt, um die gebrannte Glasur zu bilden.

Die gebrannte Standardglasur SG hatte folgende Zusammensetzung:

| **Oxid** | **Masse-%** |
|---|---|
| SiO₂ | 62,61 |
| Al₂O₃ | 11,50 |
| TiO₂ | 0,16 |
| Fe₂O₃ | 0,21 |
| CaO | 12,60 |
| K₂O | 0,43 |
| MgO | 1,11 |
| Na₂O | 2,58 |
| B₂O₃ (ICP) | 0,53 |
| P₂O₅ | 0,05 |
| SrO | 0,02 |
| ZnO | 0,03 |
| ZrO₂ | 8,00 |
| HfO₂ | 0,16 |

Die Differenzen zur Einwaage beruhen in bekannter Weise auf einem gewissen Glühverlust beim Brennen.

Diese Standardglasur SG wurde sodann auf Basis des JIS-Tests hinsichtlich ihrer antibakteriellen Wirkung untersucht. Nach Auswertung des Tests wurde eine Reduktion der Testkeimbildung auf der Standardglasur SG um -0,76 log₁₀-Stufen festgestellt, was gleichbedeutend mit keinerlei antibakterieller Wirkung ist. Das heißt, dass die Standardglasur SG ohne ZnO oder einem der anderen genannten Metalloxide keine antimikrobiellen Eigenschaften aufweist.

Sodann wurde eine weitere Vergleichsglasur HG1 hergestellt. Der diesbezügliche Schlicker wurde aus folgenden Rohstoffen hergestellt:

| **Rohstoffe** | **Masse-%** |
|---|---|
| Quarz | 32,72 |
| Schamotte | 8,71 |
| Kaolin | 4,24 |
| Calciumcarbonat | 6,56 |
| Dolomit | 1,90 |
| Zinkoxid | 26,40 |
| Glasfritte | 2,86 |
| Zinnoxid | 0,62 |
| Feldspat | 6,83 |
| Zirkonsilikat | 9,16 |

Auch dieser Schlicker wurde sodann auf einen vorgebrannten Keramikkörper aufgesprüht, auch hier betrug die Schichtdicke ca. 1 mm. Anschließend wurde der Probekörper gebrannt.

Die gebrannte Glasur HG1 hatte folgende Zusammensetzung:

| **Oxid** | **Masse-%** |
|---|---|
| SiO₂ | 50,17 |
| Al₂O₃ | 7,25 |
| TiO₂ | 0,10 |
| Fe₂O₃ | 0,16 |
| CaO | 4,52 |
| K₂O | 0,33 |
| MgO | 0,50 |
| Na₂O | 5,62 |
| B₂O₃ (ICP) | 0,84 |
| Li₂O (ICP) | 0,05 |
| P₂O₅ | 0,02 |
| SnO₂ | 0,61 |
| ZnO | 24,00 |
| ZrO₂ | 5,74 |
| HfO₂ | 0,10 |

Die Differenzen zur Einwaage beruhen in bekannter Weise auf einem gewissen Glühverlust beim Brennen.

Auch diese, bereits durch die Zugabe von ZnO verbesserte Glasur wurde dem JIS-Test unterzogen. Es stellte sich eine bereits gute antibakterielle Wirkung heraus. Es wurde eine Testkeimreduktion um 3,82 log₁₀-Stufe gemessen.

Sodann wurde ein Testkörper mit einer Glasur HG2 hergestellt, die von einem Schlicker gemäß der Glasur HG1 in seiner Rohstoffzusammensetzung ausging. Diesem Schlicker wurde sowohl PbO zu ca. 5 Masse-% in Form einer wenigstens 80 % PbO enthaltenden Bleifritte zugegeben. Das CuO wurde in Form von CuO-Pulver zu 0,25 Masse-% zugegeben. Die Anteile der sonstigen Schlickerrohstoffe wurden entsprechend reduziert, wobei die Reduktion insbesondere seitens des Quarzes erfolgte.

Der hergestellte Schlicker wurde auf einem vorgebrannten Keramikgrundkörper aufgesprüht, die Schichtdicke betrug ca. 1 mm. Anschließend wurde der Testkörper zur Ausbildung der gebrannten Glasur gebrannt.

Die Glasur HG2 hatte folgende Zusammensetzung:

| **Oxid** | **Masse-%** |
|---|---|
| SiO₂ | 48,87 |
| Al₂O₃ | 7,12 |
| TiO₂ | 0,10 |
| Fe₂O₃ | 0,15 |
| CaO | 4,44 |
| K₂O | 0,31 |
| MgO | 0,53 |
| Na₂O | 2,16 |
| B₂O₃ (ICP) | 0,84 |
| Li₂O (ICP) | 0,04 |
| CuO | 0,24 |
| P₂O₅ | 0,05 |
| SnO₂ | 0,64 |
| ZnO | 24,79 |
| ZrO₂ | 5,79 |
| HfO₂ | 0,09 |
| PbO | 3,86 |

Die Differenzen zur Einwaage beruhen in bekannter Weise auf einem gewissen Glühverlust beim Brennen.

Auch zu diesem Testkörper wurde sodann seine antibakterielle Wirksamkeit gemäß dem JIS-Standardtest ermittelt. Die erfindungsgemäße Glasur respektive deren Oberfläche zeigte eine hervorragende antibakterielle Eigenschaft. Es wurde eine Testkeimreduktion von 6,9 log₁₀-Stufen ermittelt. Die Wirksamkeit konnte gegenüber der HG1-Glasur, die bereits gute antibakterielle Eigenschaften zeigt, extrem verbessert werden. Die hergestellte Glasurschicht zeigt nicht nur einen antibakteriellen, sondern einen desinfizierenden Effekt. Auf der Glasuroberfläche wurden folglich keinerlei Keime mehr gefunden.

Das heißt, dass offensichtlich eine Kombination aus PbO und CuO in einer ZnO enthaltenden Glasur hervorragende antibakterielle respektive desinfizierende Eigenschaften aufweist.

Zur Klärung des Einflusses eines variierenden PbO-Gehalts wurden drei unterschiedliche Schlicker hergestellt, wiederum ausgehend von dem Rohstoffansatz gemäß der HG1-Glasur.

Diesen Schlickern wurde jeweils ein konstanter CuO-Gehalt von ca. 0,25 Masse-% zugegeben. Der PbO-Anteil jedoch variierte. Er betrug in dem ersten Glasurschlicker HG-P1 ca. 1 Masse-%, im zweiten Schlicker HG-P2 ca. 2 Masse-% und im dritten Glasurschlicker HG-P3 ca. 8 Masse-%. Die Anteile der anderen Rohstoffe, insbesondere des Quarzes, wurden entsprechend angepasst.

Die jeweiligen Schlicker wurden wiederum auf einen vorgebrannten keramischen Testkörper aufgesprüht, jeweils mit einer Schichtdicke von 1 mm. Anschließend wurden die Testkörper gebrannt, um drei unterschiedliche Glasuren HG-P1, HG-P2 und HG-P3 herzustellen.

Die gebrannten Glasuren HG-P1, HG-P2 und HG-P3 hatten folgende Zusammensetzung:

| **Oxid** | **HG-P1 Masse-%** | **HG-P2 Masse-%** | **HG-P3 Masse-%** |
|---|---|---|---|
| SiO₂ | 49,54 | 49,58 | 48,14 |
| Al₂O₃ | 8,85 | 8,67 | 7,47 |
| TiO₂ | 0,10 | 0,10 | 0,10 |
| Fe₂O₃ | 0,15 | 0,15 | 0,15 |
| CaO | 5,12 | 4,83 | 4,51 |
| K₂O | 0,31 | 0,31 | 0,31 |
| MgO | 0,53 | 0,53 | 0,53 |
| Na₂O | 2,16 | 1,93 | 2,08 |
| B₂O₃ (ICP) | 0,84 | 0,82 | 0,87 |
| Li₂O (ICP) | 0,04 | 0,05 | 0,04 |
| CuO | 0,24 | 0,26 | 0,25 |
| P₂O₅ | 0,05 | 0,05 | 0,05 |
| SnO₂ | 0,64 | 0,68 | 0,61 |
| ZnO | 24,79 | 24,52 | 23,21 |
| ZrO₂ | 5,79 | 5,84 | 5,43 |
| HfO₂ | 0,09 | 0,09 | 0,09 |
| PbO | 0,77 | 1,59 | 6,16 |

Die jeweiligen Glasuren respektive Testkörper wurden sodann wiederum dem JIS-Test zur Ermittlung der antibakteriellen Wirkung unterzogen. Es wurden folgende Werte ermittelt:

| **Glasur** | **log₁₀-Stufen** |
|---|---|
| HG-P1 | 4,7 |
| HG-P2 | 5,8 |
| HG-P3 | 6,7 |

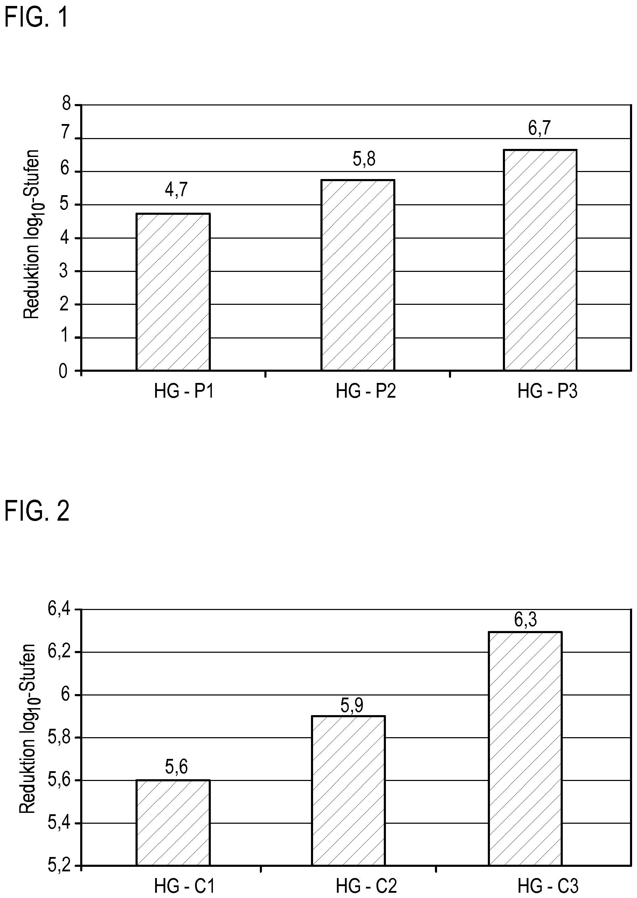

Die Ergebnisse sind in Fig. 1 in Form eines Diagramms dargestellt.

Es zeigt sich, dass eine Erhöhung des PbO-Gehalts zu einer Verbesserung des Reduktionsverhaltens und damit des Desinfektionsverhaltens führt. Es zeigt sich, dass bereits ab einem relativ geringen PbO-Anteil von ca. 2 Masse-% eine log₁₀-Stufe deutlich größer 5 erreicht wird, mithin also bereits bei geringem PbO-Anteil und ebenfalls geringem CuO-Anteil bereits eine desinfizierende Wirkung gegeben ist.

Die Ergebnisse korrelieren im Übrigen sehr gut mit dem Ergebnis zur Glasur HG2, bei der ca. 5 Masse-% PbO und 0,25 Masse-% CuO eingewogen wurden und eine Reduktionsrate von 6,9 log₁₀-Stufen festgestellt wurde.

Eine weitere Erhöhung des PbO-Anteils auf ca. 8 Masse-% im Schlicker hat nicht zu einer weiteren Erhöhung der Reduktionsrate geführt, vielmehr blieb das Reduktionsvermögen mit 6,7 log₁₀-Stufen nahezu konstant.

Um die Eigenschaften von PbO und CuO weiter zu klären, wurden im nächsten Schritt drei Probekörper mit konstantem PbO-Gehalt, jedoch variierendem CuO-Gehalt hergestellt.

Ausgangspunkt war wiederum der Schlickeransatz gemäß der HG1-Glasur. Jeder Schlicker der verschiedenen Probekörper enthielt PbO zu ca. 4 Masse-%. Der CuO-Gehalt im Schlicker variierte, er betrug im Schlicker des ersten Probekörper ca. 0,1 Masse-%, im Schlicker des zweiten Probekörper ca. 0,5 Masse-% sowie im Schlicker des dritten Probekörper ca. 1 Masse-%. Es wurden also drei unterschiedliche Schlicker angesetzt, mit jeweils variierendem CuO-Gehalt, jedoch konstantem PbO-Gehalt.

Die drei unterschiedlichen Schlicker wurden sodann wieder auf einen vorgebrannten Keramikgrundkörper mit einer Schichtdicke von ca. 1 mm gespritzt. Anschließend wurden die Probekörper gebrannt, um die jeweiligen gebrannten Glasuren auszubilden.

Eine Untersuchung der Glasuren ergab folgende Oxidanteile, wobei die 0,1 Masse-% CuO im Schlicker enthaltende Glasur mit HG-C1, die 0,5 Masse-% an CuO im Schlicker enthaltende Glasur mit HG-C2 und die 1 Masse-% CuO im Schlicker enthaltende Glasur mit HG-C3 benannt ist:

| **Oxid** | **HG-C1 Masse-%** | **HG-C2 Masse-%** | **HG-C3 Masse-%** |
|---|---|---|---|
| SiO₂ | 48,34 | 48,72 | 48,84 |
| Al₂O₃ | 8,03 | 7,84 | 7,73 |
| TiO₂ | 0,10 | 0,10 | 0,10 |
| Fe₂O₃ | 0,15 | 0,15 | 0,15 |
| CaO | 4,78 | 4,83 | 4,69 |
| K₂O | 0,31 | 0,31 | 0,31 |
| MgO | 0,53 | 0,53 | 0,53 |
| Na₂O | 2,13 | 2,02 | 2,03 |
| B₂O₃ (ICP) | 0,83 | 0,84 | 0,85 |
| Li₂O (ICP) | 0,04 | 0,05 | 0,05 |
| CuO | 0,12 | 0,48 | 1,02 |
| P₂O₅ | 0,05 | 0,05 | 0,05 |
| SnO₂ | 0,61 | 0,63 | 0,64 |
| ZnO | 24,54 | 24,21 | 24,28 |
| ZrO₂ | 5,43 | 5,21 | 5,21 |
| HfO₂ | 0,09 | 0,09 | 0,09 |
| PbO | 3,92 | 3,94 | 3,97 |

Zu jedem Testkörper wurde sodann wiederum gestützt auf die Testmethode JIS 2801 die antibakterielle Wirksamkeit der Glasuren HG-C1, HG-C2 und HG-C3 ermittelt. Es ergaben sich folgende Ergebnisse:

| **Glasur** | **log₁₀-Stufen** |
|---|---|
| HG-C1 | 5,6 |
| HG-C2 | 5,9 |
| HG-C3 | 6,3 |

Die Ergebnisse sind in Fig. 2 in Form eines Diagramms dargestellt.

Es zeigt sich, dass bei konstantem PbO-Gehalt von ca. 3,9-4 Masse-% in der gebrannten Glasur eine Zunahme der antibakteriellen Wirkung mit steigendem CuO-Gehalt einsetzt.

Der CuO-Gehalt kann noch weiter gesteigert werden, jedoch kann es bei CuO-Gehalten, die in der Nähe des Maximalwerts von 2 Masse-% liegen, zu einer Grünfärbung der Glasur kommen, was insbesondere im Bereich der Sanitärartikel, trotz der hervorragenden antimikrobiellen Wirkung, nicht gewünscht ist.

Zu den angegebenen Oxiden der jeweils untersuchten Glasuren, deren Vorhandensein jeweils durch eine Spektralanalyse ermittelt wurde, ist festzustellen, dass darunter sowohl Flussmittel als auch Trübungsmittel sowie nicht spezifisch zugegebene Anteile, primär in Form von Verunreinigungen enthalten sind. Als Flussmittel sind insbesondere CaO, K₂O und Na₂O zu nennen, als Trübungsmittel primär ZrO₂ und SnO₂. TiO₂ wirkt als Weißmacher, wird jedoch nicht gesondert zugegeben. Die sonstigen Bestandteile wie Fe₂O₃, MgO oder HfO₂ stellen primär Verunreinigungen dar.

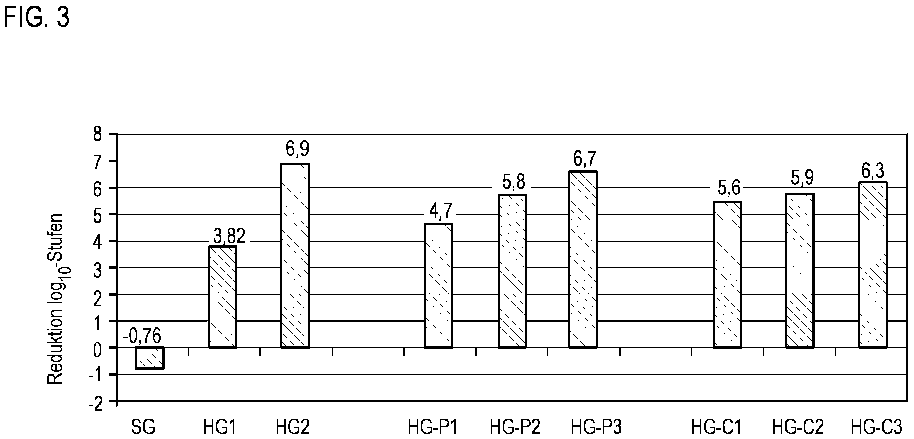

In der in der Figur 3 gezeigten Tabelle sind nochmals sämtliche ermittelten Reduktionsraten zusammengefasst dargestellt. Längs der Abszisse sind die jeweiligen Glasuren (Standardglasur SG, HG1, HG2, HG-P1, HG-P2, HG-P3, HG-C1, HG-C2, HG-C3) aufgetragen, längs der Ordinate die jeweilige Reduktionsrate in log₁₀-Stufen. Es zeigt sich ganz eindeutig die hervorragende desinfizierende Wirkung der erfindungsgemäßen Glasuren enthaltend, neben ZnO, die offensichtlich für die deutlich verbesserte Wirkung verantwortlichen Metalloxide PbO und CuO in unterschiedlichen Mischungs- oder Mengenanteilen.

Schließlich wurde auch ein Testkörper mit einer Bi₂O₃ enthaltenden Glasur hergestellt. Diese Glasur enthielt kein PbO und CuO.

Der Schlicker wurde auch hier wiederum basierend auf dem Rohstoffansatz gemäß der Glasur HG1 hergestellt, er enthielt also ZnO. Es wurde ein Gehalt an Bi₂O₃ von 0,5 Masse-% in Pulverform zugegeben. Auch dieser Schlicker wurde auf einen vorgebrannten Keramikkörper mit einer Schichtdicke von ca. 1 mm aufgesprüht und anschließend zur Bildung der gebrannten Glasur gebrannt.

Nach Fertigstellung des Testkörpers wurde sodann auch hier die antimikrobielle Wirkung der Glasuroberfläche gemäß dem JIS-Standard untersucht. Es wurde eine Reduktionsrate von 4,3 log₁₀-Stufen ermittelt. Auch diese Reduktionsrate liegt deutlich über der der HG1-Glasur enthaltend nur ZnO. Das heißt, dass allein die Zugabe einer geringen Menge von Bi₂O_{3'} zu einer deutlichen Verbesserung der antibakteriellen Glasureigenschaft führt.

## Patentansprüche

1. Keramischer Gegenstand in Form eines Sanitär-, Küchen- oder Laborgegenstands, umfassend einen keramischen Grundkörper sowie eine auf diesem aufgebrachte gebrannte Glasur, wobei die gebrannte Glasur SiO₂ zu 45-55 Masse-%, Al₂O₃ zu 6-12 Masse-%, ZnO zu 15-35 Masse-%, sowie ferner PbO zu 0,1-15 Masse-% und/oder CuO zu 0,025-2 Masse-% und/oder Bi₂O₃ zu 0,25-7 Masse-% enthält.

2. Keramischer Gegenstand nach Anspruch 1, **dadurch gekennzeichnet, dass** der Gehalt an PbO zwischen 0,5-12 Masse-% und/oder der Gehalt an CuO zwischen 0,05-1,5 Masse-% und/oder der Gehalt an Bi₂O₃ zwischen 0,35-6 Masse-% beträgt.

3. Keramischer Gegenstand nach Anspruch 2, **dadurch gekennzeichnet, dass** der Gehalt an PbO zwischen 0,75-10 Masse-% und/oder der Gehalt an CuO zwischen 0,075-1,25 Masse-% und/oder der Gehalt an Bi₂O₃ zwischen 0,5-5 Masse-% beträgt.

4. Keramischer Gegenstand nach Anspruch 3, **dadurch gekennzeichnet, dass** der Gehalt an PbO zwischen 1-8 Masse-% und/oder der Gehalt an CuO zwischen 0,1-1 Masse-% beträgt.

5. Keramischer Gegenstand nach einem der vorangehenden Ansprüche,
**dadurch gekennzeichnet, dass** entweder sowohl PbO als auch CuO, nicht aber Bi₂O₃, oder Bi₂O₃, nicht aber PbO und CuO enthalten sind.

6. Keramischer Gegenstand nach einem der vorangehenden Ansprüche,
**dadurch gekennzeichnet, dass** der Gehalt an ZnO zwischen 18-32 Masse-% beträgt.

7. Keramischer Gegenstand nach Anspruch 6, **dadurch gekennzeichnet, dass** der Gehalt an ZnO zwischen 20-30 Masse-% beträgt.

8. Keramischer Gegenstand nach Anspruch 7, **dadurch gekennzeichnet, dass** der Gehalt an ZnO zwischen 22-28 Masse-% beträgt.

9. Keramischer Gegenstand nach einem der vorangehenden Ansprüche,
**dadurch gekennzeichnet, dass** die Schichtdicke der Glasur zwischen 0,1-3 mm beträgt.

10. Keramischer Gegenstand nach Anspruch 9, **dadurch gekennzeichnet, dass** die Schichtdicke zwischen 0,5-1 mm beträgt.

11. Verfahren zur Herstellung eines keramischen Gegenstands nach einem der vorangehenden Ansprüche, **gekennzeichnet durch** folgende Schritte:
- Bereitstellen eines ungebrannten oder vorgebrannten keramischen Grundkörpers,
- Aufbringen einer Glasurbeschichtung unter Verwendung eines Schlickers enthaltend eine wenigstens 80 Masse-% PbO enthaltende Bleifritte zu 0,12-18 Masse-% und/oder CuO-Pulver zu 0,025-2 Masse-% und/oder Bi₂O₃-Pulver zu 0,25-7 Masse-%,
- Durchführung eines Brandes unter Ausbildung einer gebrannten Glasur bei einer Temperatur von 1100-1350 °C.

12. Verfahren nach Anspruch 11, **dadurch gekennzeichnet, dass** ein Schlicker enthaltend Bleifritte zu 0,6-14,4 Masse-% und/oder CuO-Pulver zu 0,05-1,5 Masse-% und/oder Bi₂O₃-Pulver zu 0,35-6 Masse-% verwendet wird.

13. Verfahren nach Anspruch 12, **dadurch gekennzeichnet, dass** ein Schlicker enthaltend Bleifritte zu 0,9-12 Masse-% und/oder CuO-Pulver zu 0,075-1,25 Masse-% und/oder Bi₂O₃-Pulver zu 0,5-5 Masse-% verwendet wird.

14. Verfahren nach Anspruch 13, **dadurch gekennzeichnet, dass** ein Schlicker enthaltend Bleifritte zu 0,12-9,6 Masse-% und/oder CuO-Pulver zu 0,1-1 Masse-% verwendet wird.

15. Verfahren nach einem der Ansprüche 11 bis 14, **dadurch gekennzeichnet, dass** ein Schlicker verwendet wird, in dem entweder sowohl PbO als auch CuO, nicht aber Bi₂O₃, oder Bi₂O₃, nicht aber PbO und CuO enthalten sind.

16. Verfahren nach einem der Ansprüche 11 bis 15, **dadurch gekennzeichnet, dass** ein Schlicker enthaltend ZnO zu 18-32 Masse-% verwendet wird.

17. Verfahren nach Anspruch 16, **dadurch gekennzeichnet, dass** ein Schlicker enthaltend ZnO zu 20-30 Masse-% verwendet wird.

18. Verfahren nach Anspruch 17, **dadurch gekennzeichnet, dass** ein Schicker enthaltend ZnO zu 22-28 Masse-% verwendet wird.

19. Verfahren nach einem der Ansprüche 11 bis 18, **dadurch gekennzeichnet, dass** die Gasurbeschichtung mit einer Schichtdicke zwischen 0,1-3 mm aufgebracht wird.

20. Verfahren nach Anspruch 19, **dadurch gekennzeichnet, dass** die Schichtdicke zwischen 0,5-1 mm beträgt.

21. Verfahren nach einem der Ansprüche 11 bis 20, **dadurch gekennzeichnet, dass** die Glasurbeschichtung in einem Druck-, insbesondere Siebdruck-, Gieß-, Spritz-, Sprüh-, Streich- oder Tauchverfahren oder einer Kombination von wenigstens zwei der genannten Verfahren aufgebracht wird.

## Claims

1. Ceramic article in the form of a sanitary, culinary or laboratory article, comprising a ceramic base body and also a fired glaze applied on said base body, the fired glaze comprising SiO₂ at 45-55 mass%, Al₂O₃ at 6-12 mass%, ZnO at 15-35 mass%, and additionally PbO at 0.1-15 mass% and/or CuO at 0.025-2 mass% and/or Bi₂O₃ at 0.25-7 mass%.

2. Ceramic article according to Claim 1, **characterized in that** the PbO content is between 0.5-12 mass% and/or the CuO content is between 0.05-1.5 mass% and/or the Bi₂O₃ content is between 0.35-6 mass%.

3. Ceramic article according to Claim 2, **characterized in that** the PbO content is between 0.75-10 mass% and/or the CuO content is between 0.075-1.25 mass% and/or the Bi₂O₃ content is between 0.5-5 mass%.

4. Ceramic article according to Claim 3, **characterized in that** the PbO content is between 1-8 mass% and/or the CuO content is between 0.1-1 mass%.

5. Ceramic article according to any of the preceding claims, **characterized in that** either both PbO and CuO, but not Bi₂O₃, or Bi₂O₃, but not PbO and CuO, are included.

6. Ceramic article according to any of the preceding claims, **characterized in that** the ZnO content is between 18-32 mass%.

7. Ceramic article according to Claim 6, **characterized in that** the ZnO content is between 20-30 mass%.

8. Ceramic article according to Claim 7, **characterized in that** the ZnO content is between 22-28 mass%.

9. Ceramic article according to any of the preceding claims, **characterized in that** the layer thickness of the glaze is between 0.1-3 mm.

10. Ceramic article according to Claim 9, **characterized in that** the layer thickness is between 0.5-1 mm.

11. Method for producing a ceramic article according to any of the preceding claims, **characterized by** the following steps:
- providing a ceramic base body which is unfired or has undergone preliminary firing,
- applying a glaze coating using a slip comprising a lead frit containing at least 80 mass% of PbO, at 0.12-18 mass% and/or CuO powder at 0.025-2 mass% and/or Bi₂O₃ powder at 0.25-7 mass%,
- carrying out firing to form a fired glaze at a temperature of 1100-1350°C.

12. Method according to Claim 11, **characterized in that** a slip comprising lead frit at 0.6-14.4 mass% and/or CuO powder at 0.05-1.5 mass% and/or Bi₂O₃ powder at 0.35-6 mass% is used.

13. Method according to Claim 12, **characterized in that** a slip comprising lead frit at 0.9-12 mass% and/or CuO powder at 0.075-1.25 mass% and/or Bi₂O₃ powder at 0.5-5 mass% is used.

14. Method according to Claim 13, **characterized in that** a slip comprising lead frit at 0.12-9.6 mass% and/or CuO powder at 0.1-1 mass% is used.

15. Method according to any of Claims 11 to 14, **characterized in that** a slip is used in which either both PbO and CuO, but not Bi₂O₃, or Bi₂O₃, but not PbO and CuO, are included.

16. Method according to any of Claims 11 to 15, **characterized in that** a slip comprising ZnO at 18-32 mass% is used.

17. Method according to Claim 16, **characterized in that** a slip comprising ZnO at 20-30 mass% is used.

18. Method according to Claim 17, **characterized in that** a slip comprising ZnO at 22-28 mass% is used.

19. Method according to any of claims 11 to 18, **characterized in that** the glaze coating is applied with a layer thickness between 0.1-3 mm.

20. Method according to Claim 19, **characterized in that** the layer thickness is between 0.5-1 mm.

21. Method according to any of Claims 11 to 20, **characterized in that** the glaze coating is applied in a printing, more particularly screen printing, casting, injecting, spraying, spreading or dipping process or in a combination of at least two of the stated processes.

## Revendications

1. Article en céramique sous la forme d'un article sanitaire, de cuisine ou de laboratoire, comprenant un corps de base céramique et une glaçure brûlée appliquée sur celui-ci, la glaçure brûlée contenant du SiO₂ à hauteur de 45 à 55 % en masse, de l'Al₂O₃ à hauteur de 6 à 12 % en masse, du ZnO à hauteur de 15 à 35 % en masse, ainsi que du PbO à hauteur de 0,1 à 15 % en masse et/ou du CuO à hauteur de 0,025 à 2 % en masse et/ou du Bi₂O₃ à hauteur de 0,25 à 7 % en masse.

2. Article en céramique selon la revendication 1, **caractérisé en ce que** la teneur en PbO est comprise entre 0,5 et 12 % en masse et/ou la teneur en CuO est comprise entre 0,05 et 1,5 % en masse et/ou la teneur en Bi₂O₃ est comprise entre 0,35 et 6 % en masse.

3. Article en céramique selon la revendication 2, **caractérisé en ce que** la teneur en PbO est comprise entre 0,75 et 10 % en masse et/ou la teneur en CuO est comprise entre 0,075 et 1,25 % en masse et/ou la teneur en Bi₂O₃ est comprise entre 0,5 et 5 % en masse.

4. Article en céramique selon la revendication 3, **caractérisé en ce que** la teneur en PbO est comprise entre 1 et 8 % en masse et/ou la teneur en CuO est comprise entre 0,1 et 1 % en masse.

5. Article en céramique selon l'une quelconque des revendications précédentes, **caractérisé en ce que** soit aussi bien du PbO que du CuO sont contenus, mais toutefois pas de Bi₂O₃, soit du Bi₂O₃ est contenu, mais toutefois pas de PbO et de CuO.

6. Article en céramique selon l'une quelconque des revendications précédentes, **caractérisé en ce que** la teneur en ZnO est comprise entre 18 et 32 % en masse.

7. Article en céramique selon la revendication 6, **caractérisé en ce que** la teneur en ZnO est comprise entre 20 et 30 % en masse.

8. Article en céramique selon la revendication 7, **caractérisé en ce que** la teneur en ZnO est comprise entre 22 et 28 % en masse.

9. Article en céramique selon l'une quelconque des revendications précédentes, **caractérisé en ce que** l'épaisseur de couche de la glaçure est comprise entre 0,1 et 3 mm.

10. Article en céramique selon la revendication 9, **caractérisé en ce que** l'épaisseur de couche est comprise entre 0,5 et 1 mm.

11. Procédé de fabrication d'un article en céramique selon l'une quelconque des revendications précédentes, **caractérisé par** les étapes suivantes :
- la préparation d'un corps de base céramique non brûlé ou pré-brûlé,
- l'application d'un revêtement de glaçure en utilisant une barbotine contenant une fritte de plomb contenant au moins 80 % en masse de PbO à hauteur de 0,12 à 18 % en masse et/ou une poudre de CuO à hauteur de 0,025 à 2 % en masse et/ou une poudre de Bi₂O₃ à hauteur de 0,25 à 7 % en masse,
- la réalisation d'une combustion pour former une glaçure brûlée à une température de 1 100 à 1 350 °C.

12. Procédé selon la revendication 11, **caractérisé en ce qu'**une barbotine contenant une fritte de plomb à hauteur de 0,6 à 14,4 % en masse et/ou une poudre de CuO à hauteur de 0,05 à 1,5 % en masse et/ou une poudre de Bi₂O₃ à hauteur de 0,35 à 6 % en masse est utilisée.

13. Procédé selon la revendication 12, **caractérisé en ce qu'**une barbotine contenant une fritte de plomb à hauteur de 0,9 à 12 % en masse et/ou une poudre de CuO à hauteur de 0,075 à 1,25 % en masse et/ou une poudre de Bi₂O₃ à hauteur de 0,5 à 5 % en masse est utilisée.

14. Procédé selon la revendication 13, **caractérisé en ce qu'**une barbotine contenant une fritte de plomb à hauteur de 0,12 à 9,6 % en masse et/ou une poudre de CuO à hauteur de 0,1 à 1 % en masse est utilisée.

15. Procédé selon l'une quelconque des revendications 11 à 14, **caractérisé en ce qu'**une barbotine dans laquelle soit aussi bien du PbO que du CuO sont contenus, mais toutefois pas de Bi₂O₃, soit dans laquelle du Bi₂O₃ est contenu, mais toutefois pas de PbO et de CuO, est utilisée.

16. Procédé selon l'une quelconque des revendications 11 à 15, **caractérisé en ce qu'**une barbotine contenant du ZnO à hauteur de 18 à 32 % en masse est utilisée.

17. Procédé selon la revendication 16, **caractérisé en ce qu'**une barbotine contenant du ZnO à hauteur de 20 à 30 % en masse est utilisée.

18. Procédé selon la revendication 17, **caractérisé en ce qu'**une barbotine contenant du ZnO à hauteur de 22 à 28 % en masse est utilisée.

19. Procédé selon l'une quelconque des revendications 11 à 18, **caractérisé en ce que** le revêtement de glaçure est appliqué en une épaisseur de couche comprise entre 0,1 et 3 mm.

20. Procédé selon la revendication 19, **caractérisé en ce que** l'épaisseur de couche est comprise entre 0,5 et 1 mm.

21. Procédé selon l'une quelconque des revendications 11 à 20, **caractérisé en ce que** le revêtement de glaçure est appliqué par un procédé d'impression, notamment de sérigraphie, de coulée, d'injection, de pulvérisation, d'enduction ou d'immersion ou une combinaison d'au moins deux des procédés mentionnés.
